# EUROPEAN PATENT APPLICATION

(11) **EP 3 216 549 A1**
(43) Date of publication of application: **13.09.2017**
(21) Application number: 15857870.8
(22) Date of filing: 03.11.2015
(51) Int. Cl.: B23K 9/04, B23K 28/02

(54) **ELECTRIC MELTING METHOD FOR FORMING NUCLEAR POWER PLANT PRESSURE VESSEL CYLINDER**

(30) Priority: 04.11.2014 CN 201410617955
(71) Applicant: Nanfang Additive Manufacturing Technology Co., Ltd, Foshan, Guangdong 528225 (CN)
(72) Inventor: WANG, Huaming, Foshan Guangdong 528225 (CN)
(74) Representative: Sun, Yiming
(86) International application number: PCT/CN2015/093634
(87) International publication number: WO 2016/070776

(57) **Abstract**

An electric melting method for forming a cylinder of a pressure vessel of nuclear power station, in which an electric melting head and a base material are connected to the anode and cathode of a power supply respectively. During the forming of a metal component, the raw metal wire is sent to a surface of the base material by a feeder and the electric melting head to create the electric arc between the raw wire and the base material under the protection of the deposit of granular auxiliary material, wherein the electric arc melts certain of deposited auxiliary material and crates a molten slag pool; a current flows through the raw wire and the molten slag pool to create the resistance heat and the electroslag heat; the raw wire is molten under the high-energy heat resource composed of the electric arc heat, the resistance heat and the electroslag heat, and creates a molten pool on partial surface of the base material; the raw wire and the auxiliary material are continuously fed and a computer is used to control the relative movement between the electric melting head and the base material based on laminated slice data of the formed components, such that the molten pool is rapidly cooled, solidified and deposited on the base material and thus forms the cylinder of the pressure vessel of the nuclear power station. Such method is high efficiency and low cost, as well as excellent mechanical performance.

## Description

### Technical Field

The present invention relates to electric melting method for forming cylinder of pressure vessel of nuclear power stations.

### Background of the Invention

As a heart equipment in the nuclear island of a nuclear power station, the reactor pressure vessel is generally used to contain the reactor core, reserve the high-temperature high-pressure coolant in a sealed shell, and shied the radiation. The intense neutron irradiation causes the deterioration of the material performance. In such a harsh working environment, the increasing safety requirement of nuclear power and the vessel itself as an irreplaceable component of the nuclear island being larger in size with the increasing generated power raise more and more strict requirement to the material of the nuclear pressure vessel.

In present, High-strength low alloy steels, e.g. Mn-Mo-Ni, is generally selected as the material to make the pressure vessel (in accordance with ASME specification SA508Gr3C11, RCC-M specification 16MnD5, or Chinese equivalent specification 20MnMoNi) through forging and subsequent heat treating process. Typically, the material may experiences heat treatment including quenching and tempering (in the middle, the material in general may need normalizing and tempering to diffuse residual hydrogen, refine grain, and thus prepare for the final heat treatment), such that a tempered martensite material structure with superior performance of strength and toughness can be obtained.

This method has been widely used in industrial production, it is, however, still very difficult for China's manufactories to make special material components due to the low manufacturing level in reality. For example, during the production of the 3rd generation nuclear power AP1000 pressure vessel, large amounts of unsatisfactory integrated closure head are produced due to the low success rate, resulting in a huge waste of resource. Furthermore, being limited by the smelting and forging process of ingot steels, the cylinder of vessel and other special components are forged individually and subsequent being welded together. It is apparent that the increased number of welding seams breaks the continuity of mechanical fibers, greatly affecting the mechanical performance of the material. Such manufacturing process is low efficiency which takes a long time to finally form the product, leading to an increasing cost.

Due to the fact that the section size of the pressure vessel is very thick and large, the core part and the surface thereof may subject to different heat treatment rates when the pressure vessel is being heat treating, resulting in the emergence of stress cracking and the inhomogeneity of the macro material phase structure, such that it gets hard to obtain excellent properties for whole section of the pressure vessel. In addition to that, taking the measure result of the final grain size into account, the material of the pressure vessel is generally at about 5 to 7. This is a limit that cannot be ignored as the current research intends to improve mechanical properties, especially strength and toughness and other combination property, by means of refining the grain.

Accordingly, it is a long need and trend for such material research to manufacture a pressure vessel with material having desired fine grain and homogeneous structure, as well as excellent mechanical properties.

### Summary of the Invention

In view of this, the object of the present invention is to provide an efficient, low-cost electric melting method for forming a cylinder of a nuclear power station pressure vessel, the cylinder being excellent in its mechanical properties.

To achieve the above object, the present invention provides an electric melting method for forming a cylinder of a nuclear power station pressure vessel, which adopts a high-energy heat source composed of electric arc heat, resistance heat and electroslag heat to melt a raw metal wire that is continuously fed, and then the molten metal wire is solidified and deposited on a base material layer by layer to create a metal component;
an electric melting head and the base material are connected to the anode and cathode of a power supply respectively; during the forming of a metal component, the raw metal wire is sent to a surface of the base material by a feeder and the electric melting head to create the electric arc between the raw wire and the base material under the protection of the deposit of granular auxiliary material, wherein the electric arc melts certain of deposited auxiliary material and crates a molten slag pool; a current flows through the raw wire and the molten slag pool to create the resistance heat and the electroslag heat; the raw wire is molten under the high-energy heat resource composed of the electric arc heat, the resistance heat and the electroslag heat, and creates a molten pool on partial surface of the base material; the raw wire and the auxiliary material are continuously fed and a computer is used to control the relative movement between the electric melting head and the base material based on laminated slice data of the formed components, such that the molten pool is rapidly cooled, solidified and deposited on the base material and thus forms the cylinder of the pressure vessel of the nuclear power station.

In the present invention, based on various types of nuclear power units, the formed cylinder of the pressure vessel has a diameter of 3-6 m, a length of 2-12 m.

In the present invention, the raw wire is made of low-alloy steel which is specifically manufactured, wherein the raw wire has a diameter of 2-10 mm and a C content of 0.08-0.12%; wherein the formed component has a C content of 0.04-0.08% and a grain size of 9-10.

In the present invention, the power supply has a current of 200 A-3000 A and a voltage of 20 V-60 V; wherein the power supply is a DC (direct current) power supply or a AC (alternative current) power supply; when the DC power supply is used, the electric melting head is connected to either the anode or the cathode of the power supply.

In the present invention, the base material or the deposited metal is heated or cooled to manage a surface temperature of the base material or the deposited metal layer at 120-450 °C, and a relative move rate between the electric melting heads and the base material is ranged of 300 mm/min-800 mm/min, such that the molten pool may be rapidly solidified and thus a material with fine grain, non-macrosegregation, and homogeneous structure may be obtained, leading to a great improvement to mechanical properties, e.g. plasticity, toughness and temperature creep, of the formed component..

In the present invention, during the process of forming the metal component layer by layer, the raw wire forms the molten pool on the lower metal surface. After molten drop entering the molten pool in the form of jet, two metal layers form together to be an integral, ensuring the overall performance of the formed metal component..

In the present invention, single electric melting head melts the raw wire at a melt efficiency of 20-50 Kg/h. Additionally, in order to increase the depositing efficiency leading to rapid forming, the number of the electric melting heads is ranged of 1-100; when multiple of electric melting heads are arranged, the adjacent electric melting heads have an interval of 50-500 mm.

In the present invention, the base material may have a shape of cylinder with a wall thickness not less than 5 mm. When the axis thereof is arranged horizontally, the layer depositing may be achieved by control the rotation of the base material and the axially and radially relative movement between the electric melting heads and the base material. The base material may be made of 308 stainless steel or common carbon steel or alloy steel. If the base material is made of 308 stainless steel, it may be considered as a heterogeneous material to connect the formed component. If the base material is made of common carbon steel or alloy steel, a subsequent machining process involving removing the base material is needed.

The present invention gets rid of restriction of complicated works, molds and special tools. The formed component is a near net shape preform which needs few finishing process after production, greatly simplifying the manufacturing process and reducing the production cycle. The formed component has mechanical properties better, at least not worse than that made of traditional forging process, performances thereof such as strength, toughness, tenacity, corrosion resistance and the like are very excellent. At the same time, the cylinder of the pressure vessel can be formed in a unit, breaking the limitations of traditional forging process technology and therefore improving the efficiency and being cost saving.

### Brief Description of the Drawings

Fig. 1A illustrates a schematic diagram of an electric melting method according to one embodiment of the present invention;
Fig. 1B illustrates a partial enlarged view of A in Fig. 1 A;
Fig. 2 illustrates a schematic diagram of the method for forming a cylinder of a pressure vessel according to one embodiment of the present invention.

### Detailed Description of the Invention

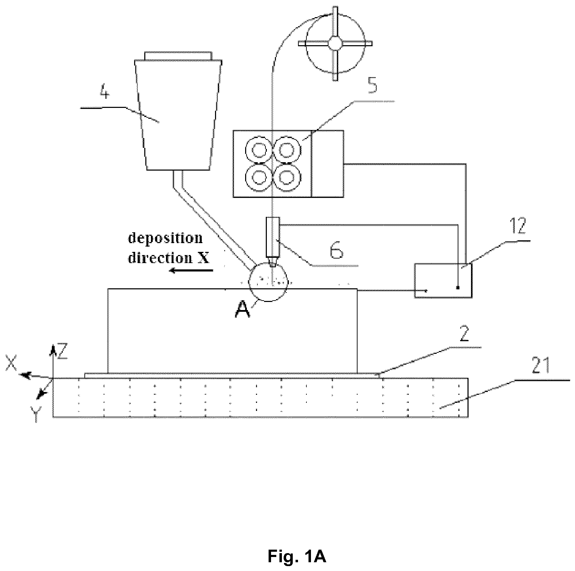

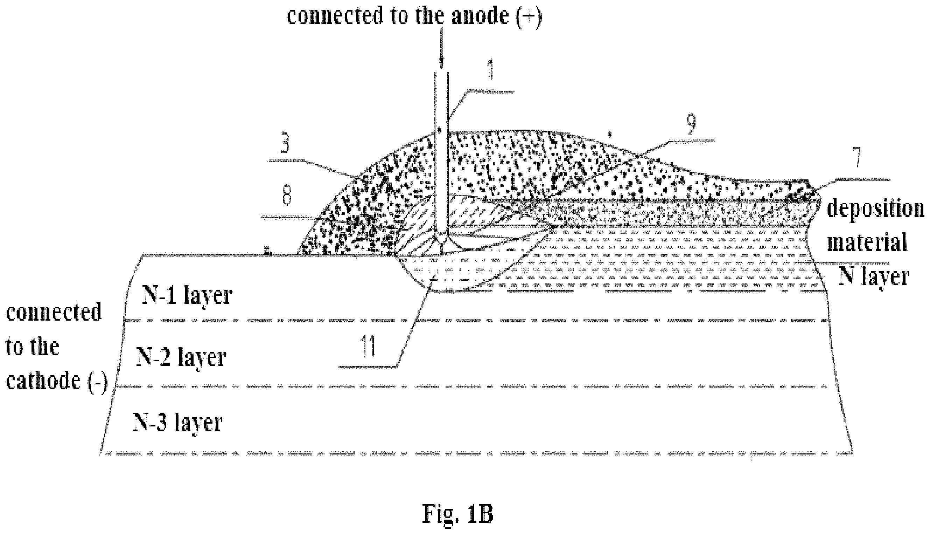

Hereinafter the present invention is detailed described with reference to the drawings. Fig. 1A illustrates a schematic diagram of an electric melting method according to one embodiment of the present invention; Fig. 1B illustrates a partial enlarged view of A in Fig. A. It should be noted that the components in the drawings are schematically illustrated, which should not be deemed as limitation to its actual shape and size relationship.

The method melts a raw wire 1 and deposits the molten wire on the base material 2 layer by layer (Fig. 1 shows that the molten wire has been deposited to N layers), and therefore leading to the formation of desired metal component.

More specifically, the implementing steps are as below:
A. a wire feeder 5 delivers a raw wire 1 to the surface of base material 2 which positioned on worktable 21, wherein the surface of the base material 2 is overlaid by granular auxiliary material delivered by powder feeder 4;
B. a power supply 12 is initiated, and the voltage of the power supply 12 facilitates the generation of electric arc 9 between raw wire 1 and base material 2; wherein the electric arc heat melts a part of auxiliary material 3, and creates a slag pool 8 of auxiliary material; the electric current flows through the raw wire 1 via the electric melting head (fusion head) 6 to generate resistant heat, and flows through the molten slag pool 8 to generate electroslag heat; therefore, a high-energy heat source composed of the identified three heat resource melts the raw wire and creates a molten pool 11 on a surface of the base material 2;
C. the relative movement of electric melting head 6 and base material 2 and the temperature of base material 2 are controlled to achieve the heat exchanging, solidification, and deposition of molten pool 11 and base material;
D. wire feeder 5 and powder feeder 4 deliver the raw wire 1 and auxiliary material 3 continuously, under the situation where the molten pool 11 and base material 2 are covered by auxiliary material 3, raw wire 1 is deposited on the base material 2 layer by layer until the workpiece is formed.

Wherein, a control means (computer) is employed to control the relative movement of the electric melting heads 6 and the base material 2 based on laminated slice data of the formed workpiece (numerical simulation, mathematical model).

As shown in the figures, the electric melting head is connected to the anode and the workpiece is connected to the cathode. It is to be understood that such connection is only exemplary. In other embodiments, the electric melting head may be connected to the cathode of the power supply whereas the workpiece is connected to the anode. In some embodiments, AC power supply may be employed.

In the present invention, in order to have an excellent high-energy heat source, especially to have adequate electroslag heat, the parameters such as the composition of the auxiliary material, the diameter of the raw wire, the electric current, the speed of relative movement of the base material and the raw wire may be adjusted as desired.

In the present invention, the raw wire 1 may be bar-shaped or belt-shaped, solid-cored or flux-cored; based on the size of the formed workpiece, the diameter of the raw wire 1 may be ranged of 2-10 mm; based on the various diameters of the raw wire 1, the length (energization length) of the raw wire extending out the electric melting head may be ranged of 20 mm-150 mm.

In the present invention, the overlaying thickness of the auxiliary material 3 is ranged of 15 mm-120 mm. The use of auxiliary material 3 has the following advantages including: avoiding the splash of the electric arc 9 by covering the electric arc 9; protecting the metal of the molten pool from oxygen, nitrogen, hydrogen in the air by covering molten pool 11 and insulating the air; keeping the metal of the molten pool from losing temperature; removing impurities and doping alloys during the metallurgical reaction process; ensuring the excellent forming of the deposited metal 10 mechanically by the formed slag pool 8 (slag crust 7).

The composition of the auxiliary material 3 includes oxide or a combination of oxide and halide. The auxiliary material 3 is involved in the reaction of molten pool to adjust the composition of the workpiece (metal component, product), therefore the alloy powder and/or the metal simple substance powder may be added into the auxiliary material based on the composition requirement and efficiency requirement of the metal component to be formed, thereby reducing the production cost.

Furthermore, step C may comprise a further step of recycling the residual auxiliary material and removing the slag crust 7 which is formed by the solidification of the slag pool 8. In the removing operation, the removing operation may be carried out mechanically or manually from a position behind the wire with a distance of 400 mm-500 mm.

The implementation of the electric melting forming method in the embodiments makes the utilization ratio of the raw wire approach 100%. Compared to the existing processing technology (e.g. forging, casting and the like), the present method has less manufacturing process (complex heat treatment is not more needed), shorter production cycle, higher efficiency. The formed metal component has very small machining allowance reducing the time on finish machining and saving lots of material.

### EMBODIMENTS

The embodiment describes a forming process using a horizontal electric melting method to prepare a cylinder of nuclear power pressure vessel. In traditional technology, the inner wall of the cylinder is build-up welded a layer of 308 stainless steel with a thickness of about 8 mm, and wall thickness of the cylinder of the pressure vessel is about 200 mm, the equivalent have been used including:
(1) a rotary support table;
(2) an electric melt power supply;
(3) electric melt heads;
(4) an auto wire feeder;
(5) an auxiliary material auto feeder and an auxiliary material auto recycler;
(6) a heater;
(7) a cooler;
(8) a base material;
(9) a center control means.

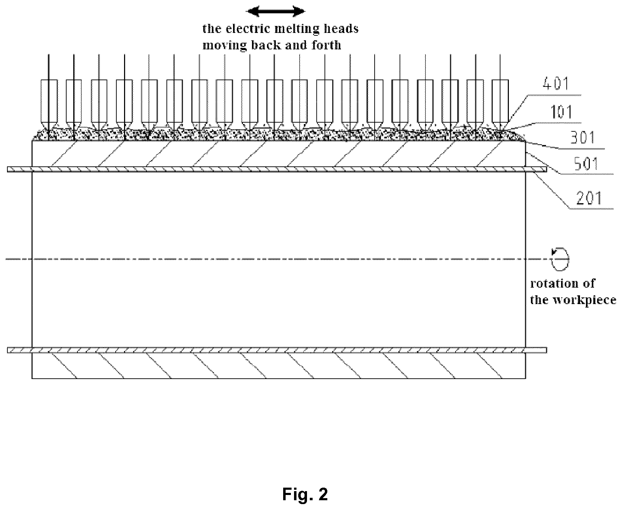

Fig. 2 illustrates a schematic diagram of the method for forming a cylinder of a pressure vessel according to one embodiment of the present invention, wherein the power supply, the auto wire feeder and etc. are not shown for simplicity. The material power supply has the following parameters:
1) raw wire 101 (C: 0.10-0.12%, other elements conform with SA508-3) with a diameter of 5 mm;
2) specific auxiliary material 301, composed of 29.5% CaO+MgO, 30% AI₂O₃+MnO, 20.5% SiO₂+TiO 20% CaF₂;
3) number of the electric melting heads: nine electric melting heads 601, wherein the electric melting power supply is a DC power supply, the electric melting heads 601 being connected to the anode of the power supply and the base material 201 being connected to the cathode of the power supply;
4) the processing parameters of the electric melting are as follows: the electric melting current is of 900A, the electric melting voltage is of 42V, the relative movement rate between the electric melting heads 601 and the base material 201 is ranged of 600-700 mm/min (molten pool movement rate).

The electric melting method adopts the metal component to prepare annular metal components, the implementation comprising the following steps:
(1) horizontally providing the cylindrical base material 201 in accordance with its axis, and support it on the rotary support table, wherein the nineteen electric melting heads are arranged horizontally and evenly over the base material 201 with an interval of about 350 mm (the central control means determines the accurate position and movement), and then each of the electric melting heads keeps a distance from the surface (outer surface) of the base material 201, and then selecting a starting point for the electric melting process;
(2) feeding the raw wire 101 and the auxiliary material to the surface of the substrate 201, initiating the power supply, and introducing the high-energy heat source to melt the raw wire and the auxiliary material and at the same time rotating the base material 201 to start the electric melting deposition of the first pass of the first layer (each of layers is constituted of multiple axially-arranged passes) of each electric melting head;
(3) after a distance between the electric melting head 601 and the start point of the electric melting is formed, initiating the auxiliary material recycling device to recycle the unmelted auxiliary material 301, such that the slag crust is exposed and being removed to facilitate the electric melting deposition (accumulation) for the pass; initiating the cooler or heater subsequently to cool or heat the electric melting deposited metal, such that the temperature of the base (which is referred to the base material 201 during the building of the first layer and the former deposited metal layer during the building of other layers) is controlled at a range of 200-300 °C;
(4) when the base material 201 is rotated one round and the electric melting deposition of the first pass is finished, controlling all of the electric melting heads 201 via the control means to move towards the left by a distance of the three-quarter width of the melting pass, and at the same time adjusting the distance between each electric melting head 601 and the surface of the base material 201, especially the distance between each of the five electric melting heads (No. 18-22) and the surface of the base material 201, so as to ensure the stability of the electric melting; after that, starting the electric melting deposition of the second pass of the first layer, and the left and right passes of which should be well overlapped during the electric melting deposition;
(5) after the electric melting deposition of the second pass is done, repeating step (4) to finish the forming of the electric deposition for the remaining passes; when the electric melting head comes to the last pass, the end point of the last pass and the start point of the adjacent electric melting heads should be well overlapped so as to finish the electric melting deposition of the first layer;
(6) after the electric melting deposition of the first layer is done, all of the electric melting heads are lifted by a height equal to the deposition thickness of one layer (namely, the layer thickness); when the electric melting deposition of the first pass of the second layer is started, the end point of the electric melting head for the first layer is the start point of the first pass of the second layer, so as to achieve the continuous deposition;
(7) after the electric melting deposition of the first pass of the second layer is finished, moving all of the electric melting heads towards the right simultaneously by a distance of three-quarter width of the melting pass, and the distance between each electric melting head and the base material is automatically adjusted at the same time to ensure the stability of the electric melting; then starting the electric melting deposition for the second pass of the second layer so that the left and right pass of the second pass of which are well overlapped;
(8) after the electric melting deposition for the second pass of the second layer is done, repeating step (7) to finish the electric melting deposition for the remaining passes; when the electric melting head comes to the last pass, the end point of the last pass and the start point of the first pass of the adjacent electric melting heads are required to be well overlapped until the electric melting deposition for the second layer is finished;
(9) repeating steps (6)-(8) to finish the electric melting deposition for the remaining layers; during this step, the electric melting heads of the adjacent electric melting deposition layer may be moved in opposite directions, so that a complete metal component is formed by the continuous electric melting deposition.

After the metal component is formed, the stainless steel base material 201 becomes a part of the cylinder of the pressure vessel, such that different materials are used to form the cylinder directly that changes the traditional process which forges SA508-3 cylinder first and then build-up welds the 308 stainless steel on the inner wall. Moreover, because multiple (twenty one) of electric melting heads are used and arranged side by side, the traditional process that carries out forging in sections first and build-up welding afterwards is changed. As such, the process and procedure are simplified and the working efficiency and quality are improved.

In the embodiments, because multiple (nineteen) of electric melting heads 401 are arranged side by side and used to carry out the integral forming at the same time, the forming efficiency is greatly increased. It is also to be noted that the number and arrangement of the electric melting heads may be adjusted in accordance with the requirement of users.

## Claims

1. An electric melting method for forming a cylinder of a nuclear power station pressure vessel, **characterized in that**
providing a high-energy heat source composed of electric arc heat, resistance heat, and electroslag heat to melt a raw metal wire which is fed continuously, and create a metal component by solidifying and depositing the molten metal wire on a base material layer by layer;
providing an electric melting head and a base material being connected to the anode and cathode of a power supply respectively; wherein, during the forming of the metal component, the raw wire is fed to a surface of the base material by a feeder and the electric melting head to generate the electric arc between the raw wire and the base material under the protection of the deposit of granular auxiliary material, wherein the electric arc melts certain of deposited auxiliary material and crates a molten slag pool; an electric current flows through the raw wire and the molten slag pool of auxiliary material and generates the resistance heat and the electroslag heat; wherein the raw wire is molten under the high-energy heat resource composed of the electric arc heat, the resistance heat and the electroslag heat, and thereby creating a molten pool on partial surface of the base material; wherein the raw wire and the auxiliary material are continuously fed and a computer is employed to control the relative movement between the electric melting head and the base material based on laminated slice data of the formed component, such that the molten pool is rapidly cooled, solidified and deposited on the base material and thus forms the cylinder of the pressure vessel for a nuclear power station.

2. The electric melting method according to claim 1, **characterized in that** based on various types of nuclear power units, the formed cylinder of the pressure vessel has a diameter of 3-6 m, a length of 2-12 m.

3. The electric melting method according to claim 1, **characterized in that**
the raw wire is manufactured in accordance with ASME material specification SA508Gr3C11, RCC-M material specification 16MnD5 or other equivalents, wherein the raw wire has a diameter of 3-10 mm and a C content of 0.08-0.12%; wherein the formed component has a C content of 0.04-0.08% and a grain size of 9-10.

4. The electric melting method according to claim 1, **characterized in that** based on various diameters of the raw wire, the power supply has a current of 200 A-3000 A and a voltage of 20 V-60 V; wherein the power supply is a DC (direct current) power supply or a AC (alternative current) power supply; when the DC power supply is used, the electric melting head is connected to either the anode or the cathode of the power supply.

5. The electric melting method according to claim 1, **characterized in that** based on requirements of the cylinder of the pressure vessel, the base material or the deposited metal is heated or cooled to manage a surface temperature of the base material or the deposited metal layer at 120-450 °C.

6. The electric melting method according to claim 1, **characterized in that** based on the size requirement and efficiency requirement of the formed components of the pressure vessel, the number of the electric melting heads is ranged of 1-100; when a plurality of electric melting heads are arranged, the adjacent electric melting heads have a distance of 50-500 mm.

7. The electric melting method according to claim 1, **characterized in that**
the base material provides a work support for the cylinder of the pressure vessel, wherein the base material has a shape of cylinder with a wall thickness not less than 5 mm; wherein the base material is made of 308 stainless steel or common carbon steel or alloy steel; if the base material is made of 308 stainless steel, the base material is retained as a part of the formed component after the component is formed; if the base material is made of common carbon steel or alloy steel, the base material is removed by following machining.
